# EUROPEAN PATENT APPLICATION

(11) **EP 4 589 246 A1**
(43) Date of publication of application: **23.07.2025**
(21) Application number: 23894364.1
(22) Date of filing: 26.10.2023
(51) Int. Cl.: G01B 11/25, G01B 11/245

(54) **SURFACE SHAPE MEASUREMENT DEVICE AND SURFACE SHAPE MEASUREMENT METHOD**

(30) Priority: 22.11.2022 JP 2022186875
(71) Applicant: JFE Steel Corporation, Tokyo 100-0011 (JP)
(72) Inventor: ENOEDA Seiji, Tokyo 100-0011 (JP); YAMAHIRA Naoshi, Tokyo 100-0011 (JP); NISHINA Yoshiaki, Tokyo 100-0011 (JP)
(74) Representative: Scott, Stephen John
(86) International application number: PCT/JP2023/038747
(87) International publication number: WO 2024/111352

(57) **Abstract**

A surface shape measurement device (10) that measures a surface shape of a belt driven in a direction of travel by a drive means, the surface shape measurement device including: a plurality of laser sensors (11) configured to measure the surface shape of the belt by emitting a line laser extending in a width direction of the belt onto the belt, wherein extents of line lasers emitted by the plurality of laser sensors are in part in vicinity of each other; and an arithmetic unit (12) configured to control emission timings of the laser sensors so that the emission timings of the plurality of laser sensors do not overlap each other, to acquire measurement data for the laser sensors, and to compute the surface shape of the belt based on the acquired measurement data.

## Description

### TECHNICAL FIELD

The present disclosure relates to a surface shape measurement device and a surface shape measurement method. The present disclosure relates in particular to a surface shape measurement device and a surface shape measurement method that measure a surface shape of a belt driven in a direction of travel by a drive means.

### BACKGROUND

Belt conveyors with a conveyor belt (as an example of a belt) wrapped around a pair of pulleys serving as a driving means are known as transport devices for transporting raw materials or the like. Because the thickness of the conveyor belts becomes thinner as the transport surfaces wear down over long periods of operation, the thickness of conveyor belts needs to be managed periodically so as to prevent fractures of the conveyor belts.

Here, as a method of measuring the thickness of conveyor belts, for example, Patent Literature (PTL) 1 and Patent Literature (PTL) 2 describe a device and a system by which unevenness of a surface of a conveyor belt is measured by the light-sectioning method using a line laser.

### CITATION LIST

### Patent Literatures

PTL 1: JP 2017-032346 A
PTL 2: JP 2020-076767 A

### SUMMARY

### (Technical Problem)

In PTL 1, only one laser sensor is installed to emit a line laser onto the conveyor belt, thus making it difficult to handle a conveyor belt that is wider than the width of the emitted line laser. In addition, in a case in which a plurality of laser sensors are arranged in a width direction of the conveyor belt and the plurality of laser sensors are configured to emit a line laser onto the entire width of the conveyor belt, it is necessary to partially overlap extents of the emitted line lasers, so as to eliminate areas that are left unmeasured. In areas in which the laser beams overlap, however, the lasers interfere with each other, and accurate measurement values cannot be obtained. In PTL 2, although a configuration with a plurality of line laser emitters is described, interference between lasers is not considered.

In view of such circumstances, it would be helpful to provide a surface shape measurement device and a surface shape measurement method that can handle a belt wider than the width of a single emitted line laser and that can accurately measure the thickness of the belt without interference between line lasers.

### (Solution to Problem)

(1) A surface shape measurement device according to an embodiment of the present disclosure is
   a surface shape measurement device that measures a surface shape of a belt driven in a direction of travel by a drive means, the surface shape measurement device including:
   a plurality of laser sensors configured to measure the surface shape of the belt by emitting a line laser extending in a width direction of the belt onto the belt, wherein extents of line lasers emitted by the plurality of laser sensors are in part in vicinity of each other; and
   an arithmetic unit configured to control emission timings of the laser sensors so that the emission timings of the plurality of laser sensors do not overlap each other, to acquire measurement data for the laser sensors, and to compute the surface shape of the belt based on the acquired measurement data.
(2) As an embodiment of the present disclosure, in (1),
   the laser sensors are configured to measure the surface shape of the belt while the belt is in operation, and
   the arithmetic unit is configured to acquire measurement data for an entire length in the direction of travel of the belt and to compute the surface shape of the belt based on the acquired measurement data.
(3) As an embodiment of the present disclosure, in (1) or (2),
   the plurality of laser sensors are arranged side by side in the width direction of the belt, and the extents of the emitted line lasers overlap in the width direction of the belt, and
   the arithmetic unit is configured to compute the surface shape over an entire width of the belt, by synthesizing the measurement data for the plurality of laser sensors.
(4) As an embodiment of the present disclosure, in any one of (1) to (3),
   the belt is wrapped around a pulley serving as a drive means, and
   the laser sensors are configured to measure the surface shape of the belt in a portion in which the belt contacts the pulley.
(5) As an embodiment of the present disclosure, in any one of (1) to (4), the laser sensors have a sampling frequency of 1 kHz or higher.
(6) A surface shape measurement method according to an embodiment of the present disclosure is
   a surface shape measurement method that measures a surface shape of a belt driven in a direction of travel by a drive means, the surface shape measurement method including:
   a measurement step of measuring the surface shape of the belt by emitting a line laser extending in a width direction of the belt onto the belt using a plurality of laser sensors, wherein extents of line lasers emitted by the plurality of laser sensors are in vicinity of each other, while controlling emission timings of the laser sensors so that the emission timings of the plurality of laser sensors do not overlap each other; and
   an arithmetic step of acquiring measurement data for the laser sensors and computing the surface shape of the belt based on the acquired measurement data.

### (Advantageous Effect)

According to the present disclosure, the surface shape measurement device and the surface shape measurement method that can handle a belt wider than the width of a single emitted line laser and that can accurately measure the thickness of the belt without interference between line lasers are provided.

### BRIEF DESCRIPTION OF THE DRAWINGS

In the accompanying drawings:
FIG. 1 is a schematic diagram illustrating an example configuration of a surface shape measurement device according to an embodiment of the present disclosure;
FIG. 2 is a side view illustrating a belt conveyor measured by the surface shape measurement device of FIG. 1;
FIG. 3 is a plan view illustrating the belt conveyor measured by the surface shape measurement device of FIG. 1;
FIG. 4 is a view illustrating waveforms of signals that control the timing of emitting line lasers in the surface shape measurement device of FIG. 1;
FIG. 5 is a view illustrating measurement of a surface shape by a plurality of laser sensors 11;
FIG. 6 is a view illustrating an example configuration of a surface shape measurement device according to a modification; and
FIG. 7 is a view illustrating waveforms of signals that control the timing of emitting line lasers in the surface shape measurement device of FIG. 6.

### DETAILED DESCRIPTION

Hereinafter, a surface shape measurement device and a surface shape measurement method according to an embodiment of the present disclosure will be described with reference to the drawings. In the figures, the same or corresponding portions are denoted with the same reference signs. In the description of the present embodiment, description of the same or corresponding portions will be omitted or simplified as appropriate.

### <Surface Shape Measurement Device>

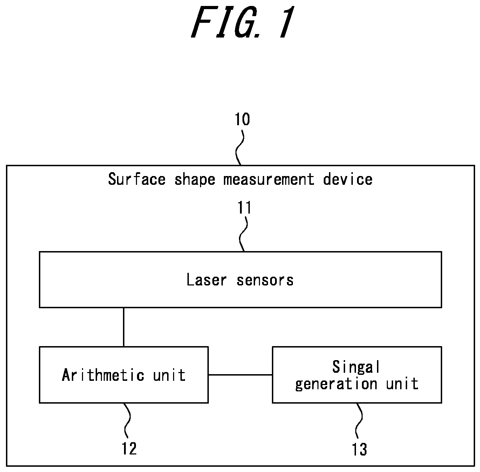

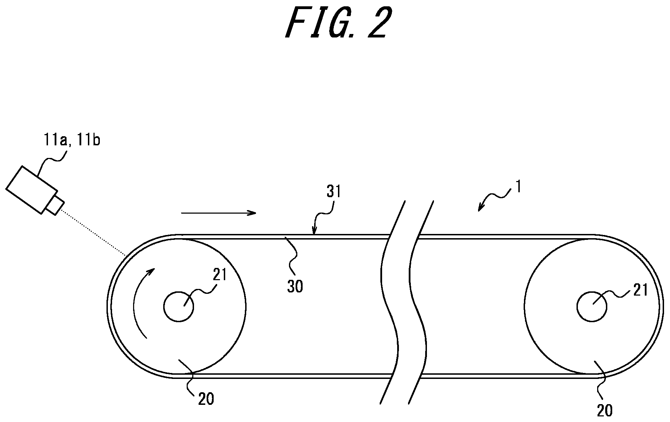

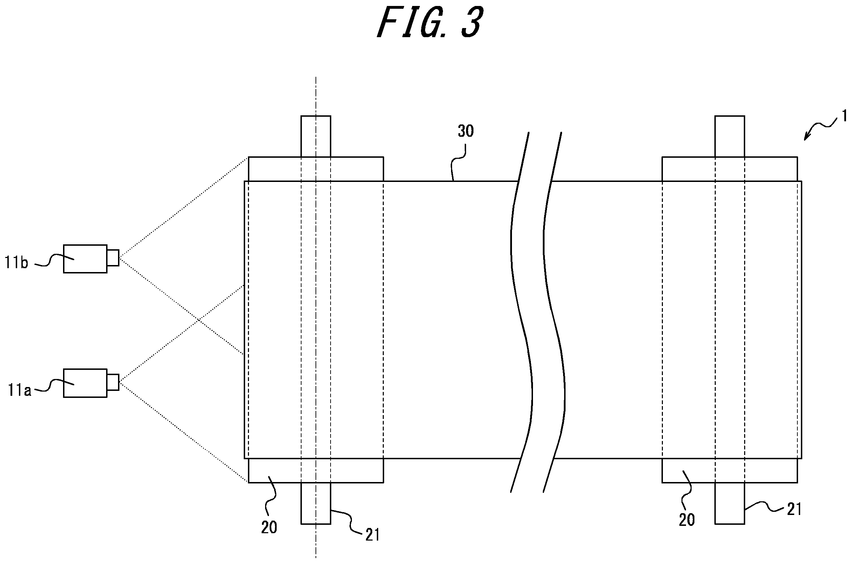

FIG. 1 illustrates an example configuration of a surface shape measurement device 10 according to an embodiment of the present disclosure. FIG. 2 is a side view illustrating a belt conveyor 1 measured by the surface shape measurement device 10 of FIG. 1. FIG. 3 is a plan view illustrating the belt conveyor 1 measured by the surface shape measurement device 10 of FIG. 1. The surface shape measurement device 10 measures a surface shape of a conveyor belt 30 wrapped around pulleys 20, as illustrated in FIG. 2. Here, the pulleys 20 are an example of a drive means. The conveyor belt 30 is an example of a belt. The surface shape measurement device 10 is a device that measures the surface shape of the belt driven in a direction of travel by the drive means. Although the belt is not limited to the conveyor belt 30, it is described as the conveyor belt 30 driven by the pulleys 20 in the present embodiment. Here, the direction of travel is a direction in which the belt moves by driving force from the drive means. In the present embodiment, the direction of travel is also referred to as a direction of transport. The direction of transport is a direction in which transported items placed on a surface 31 of the conveyor belt 30 in operation move.

In the belt conveyor 1, the thickness of the conveyor belt 30 needs to be managed so as to prevent fractures of the conveyor belt 30. The thickness of the conveyor belt 30 can be computed from the surface shape measured by the surface shape measurement device 10 and managed. When the surface shape can be measured with high accuracy, the thickness of the conveyor belt 30 can be accurately obtained by arithmetic operations. Here, the surface shape is a shape of the surface 31 of the conveyor belt 30 including its unevenness. For example, a portion on the surface 31 of the conveyor belt 30 that is depressed compared to its surroundings can indicate that this portion of the conveyor belt 30 is thinner than the surroundings.

As illustrated in FIG. 1, the surface shape measurement device 10 according to the present embodiment includes laser sensors 11, an arithmetic unit 12, and a signal generation unit 13. The surface shape measurement device 10 measures the surface shape of the conveyor belt 30, by cooperative operation of the laser sensors 11, the arithmetic unit 12, and the signal generation unit 13. The laser sensors 11, the arithmetic unit 12, and the signal generation unit 13 may be connected by a network, such as a Local Area Network (LAN), so as to be able to transmit and receive information (measurement data) obtained from measurement. Details of the components of the surface shape measurement device 10 will be described later.

As illustrated in FIG. 2, the conveyor belt 30, which is an object to be measured by the surface shape measurement device 10, is wrapped around the pair of pulleys 20. When the pulleys 20 rotate, the conveyor belt 30 moves, thereby being able to move transported items placed on the surface 31. Here, the surface 31 of the conveyor belt 30 is a surface (outer surface) of the conveyor belt 30 that is opposite to a surface (inner surface) located closer to the pulleys 20.

### <Laser Sensors>

The surface shape measurement device 10 includes a plurality of laser sensors 11. As illustrated in FIG. 2 and FIG. 3, the plurality of laser sensors 11 may be indicated as a laser sensor 11a and a laser sensor 11b so that they can be distinguished. In the present embodiment, the laser sensors 11 are a device using the laser light-sectioning method. The laser sensors 11 can measure the surface shape of the conveyor belt 30 while being out of contact with the conveyor belt 30, by emitting a line laser and capturing the emitted laser with a camera. That is, the laser sensors 11 measure the distance to the surface 31 of the conveyor belt 30, by emitting a line laser and receiving its reflected light with an optical sensor. Then, based on information on the distance, the laser sensors 11 can measure the surface shape at the surface 31 of the conveyor belt 30. Here, the line lasers are a line-shaped laser beam.

It is preferable for the laser sensors 11 to make a measurement while the pulleys 20 and the conveyor belt 30 are rotating. As illustrated in FIG. 2 and FIG. 3, in the present embodiment, the two laser sensors 11a and 11b are arranged side by side in a width direction of a pulley 20 (in other words, in the width direction of conveyor belt 30) so that the entire width (entire length in the width direction) of the pulley 20 can be measured. The laser beams (line lasers) from the laser sensors 11a and 11b extend in the width direction of the conveyor belt 30, and the extents of the emitted laser beams are in the vicinity of each other. Here, "in the vicinity" in the present embodiment means a state in which the laser beams at least in part overlap each other, or a state in which when one laser beam is captured by a camera, the other laser beam is included in a capturing range of the camera. In the present embodiment, the laser beams from the laser sensors 11a and 11b overlap each other by several mm to several tens of mm, so as to avoid creating areas that are left unmeasured. Overlapping end portions and the opposite end portions in end portions of the line lasers extend to outer sides of end portions of the conveyor belt 30 in the width direction on the pulley 20.

In the present embodiment, by the plurality of laser sensors 11a and 11b each emitting a laser beam onto the conveyor belt 30, the surface shape of the entire width of the conveyor belt 30 can be measured. The laser sensors 11 may be disposed at positions from which they can emit a laser beam onto the conveyor belt 30 from diagonally above the pulley 20, so that the surface shape of the conveyor belt 30 can be measured in a portion in which the conveyor belt 30 contacts the pulley 20. At this time, in order to accurately measure a thickness direction of the conveyor belt 30, the laser sensors 11 are installed so that directions in which the laser beams are emitted pass through a center 21 of the pulley 20. Here, the positions of the laser sensors 11 are not limited to diagonally above the pulley 20. For example, when viewed from the side as illustrated in FIG. 2, the laser sensors 11 can be arranged at any position as long as the laser beams are emitted between 6 o'clock and 12 o'clock on the pulley 20 located closer to the laser sensors 11 (on the left half side of the pulley 20 on the drawing). By measuring the surface shape of the conveyor belt 30 in the portion in which the conveyor belt contacts the pulley 20, the conveyor belt 30 does not swing up and down and can be measured in a stable posture. In this way, the laser sensors 11 can make a measurement and obtain information on the surface shape of the conveyor belt 30 including its unevenness. Because the laser sensors 11 are a non-contact type, it is possible to measure the surface shape of the conveyor belt 30 while the conveyor belt 30 is in operation.

### <Arithmetic Unit>

The arithmetic unit 12 computes the surface shape of the conveyor belt 30, based on measurement data for the surface of the conveyor belt 30 obtained by measurement using the laser sensors 11 and on operation information of the conveyor belt 30 that is acquired as necessary. Here, the operation information of the conveyor belt 30 includes information indicating that the conveyor belt 30 is in operation.

The arithmetic unit 12 controls the emission timings of laser beams of the laser sensors 11a and 11b based on signals (pulse waveforms) generated by the signal generation unit 13.

The arithmetic unit 12 includes a processor that executes arithmetic operations and a memory unit that stores data (e.g., information on the surface shape) to be used in the arithmetic operations. The arithmetic unit 12 may be, for example, a computer. The processor is, for example, a general-purpose processor or a dedicated processor that is dedicated to specific processing, but is not limited to these and can be any processor. The memory unit includes one or more memories. The memories can be, for example, a semiconductor memory, a magnetic memory, an optical memory, or the like, but is not limited to these and can be any memories.

### <Signal Generation Unit>

The signal generation unit 13 generates signals that determine the emission timings and the emission times of laser beams of the laser sensors 11a and 11b. The signals generated by the signal generation unit 13 are pulse waveforms, as described above, and they are generated so that the laser sensors 11a and 11b do not emit a laser beam simultaneously. Here, the signal generation unit 13, together with the arithmetic unit 12, may be embodied by a computer.

### <Surface Shape Measurement Method>

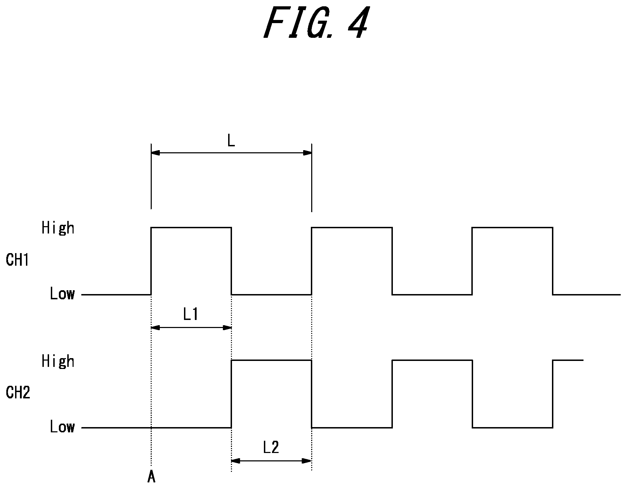

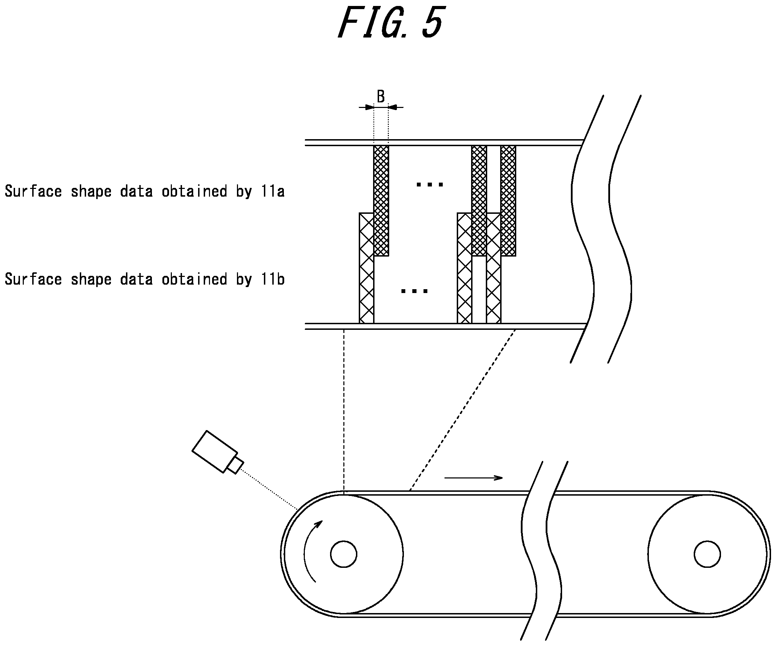

With reference to FIG. 4 and FIG. 5, the surface shape measurement method by the conveyor belt 30 using the laser sensors 11 will be described. FIG. 4 illustrates waveforms of signals generated by the signal generation unit 13 that control the timing of emitting line lasers. FIG. 5 is a view illustrating measurement of the surface shape by the plurality of laser sensors 11.

While the conveyor belt 30 is in operation, the signal generation unit 13 generates pulse waveforms for two channels as illustrated in FIG. 4. The pulse waveforms are a signal that takes two values, High and Low. The arithmetic unit 12 receives the pulse waveforms from the signal generation unit 13 and when either pulse waveform is High, it outputs a laser beam emission command to cause the corresponding laser sensor 11 to emit a laser beam. Channel 1 (CH1) corresponds to the laser sensor 11a, and channel 2 (CH2) corresponds to the laser sensor 11b. The horizontal axis in FIG. 4 indicates time.

The waveform of CH1 changes from Low to High at the time indicated by A. The arithmetic unit 12 outputs a laser beam emission command to the laser sensor 11a, and the laser sensor 11a measures the surface shape of approximately one-half in the width direction of the conveyor belt 30 on one end side. When time L1 elapses, the waveform of CH1 goes from High to Low, and the arithmetic unit 12 outputs a laser beam emission stop command to cause the laser sensor 11a to stop emitting the laser beam. This completes the measurement of the surface shape of the conveyor belt 30 by the laser sensor 11a in accordance with one pulse waveform. In FIG. 5, one rectangular area indicated as surface shape data obtained by the laser sensor 11a corresponds to the surface shape of the conveyor belt 30 measured in accordance with one pulse waveform of CH1.

The waveform of CH2 goes from Low to High at the timing when the waveform of CH1 goes from High to Low. In order to ensure that interference between line lasers is prevented, a slight time lag may be provided between the timing when the waveform of CH1 goes from High to Low and the timing when the waveform of CH2 goes from Low to High. The arithmetic unit 12 outputs a laser beam emission command to the laser sensor 11b, and the laser sensor 11b measures the surface shape of approximately one-half in the width direction of the conveyor belt 30 on another end side. When time L2 elapses, the waveform of CH2 goes from High to Low, and the arithmetic unit 12 outputs a laser beam emission stop command to the laser sensor 11b. This completes the measurement of the surface shape of the conveyor belt 30 by the laser sensor 11b in accordance with one pulse waveform. In FIG. 5, one rectangular area indicated as surface shape data obtained by the laser sensor 11b corresponds to the surface shape of the conveyor belt 30 measured in accordance with one pulse waveform of CH2.

At the timing when the waveform of CH2 goes from High to Low, the waveform of CH1 goes from Low to High again. In order to ensure that interference between line lasers is prevented, a slight time lag may be provided between the timing when the waveform of CH2 goes from High to Low and the timing when the waveform of CH1 goes from Low to High. The arithmetic unit 12 outputs a laser beam emission command to the laser sensor 11a, and the laser sensor 11a measures the surface shape of approximately one-half in the width direction of the conveyor belt 30 on the one end side. The surface shape measurement of the conveyor belt 30 by the laser sensors 11a and 11b is repeated in accordance with the changes in the waveforms of CH1 and CH2, with a total of the aforementioned times L1 and L2 as a period L. The surface shape measurement of approximately one-half in the width direction of the conveyor belt 30 is executed alternately on the one end side and on the other end side, and measurement data is stored in the arithmetic unit 12.

Such surface shape measurement is continued during one rotation of the conveyor belt 30, so as to accumulate measurement data for the entire length in a longitudinal direction (direction of travel) of the conveyor belt 30. Here, as illustrated in FIG. 5, because the laser sensor 11a and the laser sensor 11b operate alternately, surface shape data for the conveyor belt 30 can be configured by a non-contiguous set of measurement data including missing parts that have not been actually measured. For example, the arithmetic unit 12 can compute a surface shape, by estimating it using a known interpolation method (linear interpolation in an example) based on actual measurement data before and after, even when it is not actually measured in part in the direction of travel of the conveyor belt 30. The arithmetic unit 12 then computes the surface shape of the entire width of the conveyor belt 30, by synthesizing the measurement data for the plurality of laser sensors 11. Here, in order to improve the accuracy of estimation, the length in the direction of travel of an area, as indicated by B in FIG. 5, that is measured in accordance with one pulse waveform needs to be sufficiently small. For example, in a case in which B is less than or equal to a predetermined length (10 mm in an example), the surface shape is unlikely to change significantly in adjacent areas that are left unmeasured, and interpolation can provide sufficiently accurate estimation. On the other hand, in a case in which B is more than the predetermined length (10 mm in an example), the surface shape may change significantly in the adjacent areas that are left unmeasured, due to the presence of a defect, for example. This may lead to a decrease in the accuracy of estimation. The length of B in FIG. 5 depends on the period L in FIG. 4. In order to obtain highly accurate surface shape data for the conveyor belt 30, the period L is preferably as short as possible. Because the period L is determined by a sampling frequency of the laser sensors 11, the sampling frequency is preferably as high as possible. For example, the sampling frequency of the laser sensors 11 can be approximately 1 kHz (1000 times per second), which is sufficiently fast compared to a drive speed (transport speed) of the conveyor belt 30, so that highly accurate surface shape data for the conveyor belt 30 can be obtained. The sampling frequency of the laser sensor 11 may be 1 kHz or higher. Here, although it is possible to actually measure all the surface shape data for the conveyor belt 30, it is necessary rotate the conveyor belt 30 once for each of the plurality of laser sensors 11 to execute the surface shape measurement. For example, in a case in which the laser sensors 11a and 11b are provided, the conveyor belt 30 needs to be rotated twice to actually measure the entire length and the entire width of the conveyor belt 30, which takes twice the measurement time. That is, the surface shape measurement method according to the present embodiment can acquire highly accurate surface shape data for the conveyor belt 30 in a short period of time.

As explained above, the surface shape measurement method executed by the surface shape measurement device 10 according to the present embodiment includes the following steps. First, in a measurement step, the plurality of laser sensors is used, wherein extents of line lasers emitted by the plurality of laser sensors are in the vicinity of each other, and the emission timings of the laser sensors are controlled by, for example, pulse waveforms so that the emission timings of the plurality of laser sensors do not overlap each other. Furthermore, in the measurement step, the surface shape of the belt is measured by emitting a line laser extending in the width direction of the belt onto the belt, while controlling the emission timings of the laser sensors. Then, in an arithmetic step, the arithmetic unit 12 acquires measurement data for the laser sensors and computes the surface shape of the belt based on the acquired measurement data.

### <Belt Management Method>

Using the surface shape measurement method described above, the conveyor belt 30 can be managed (monitored), based on the computed surface shape of the conveyor belt 30. For example, the surface shape measurement device 10 determines whether the thickness of the conveyor belt 30 is sufficient, based on the computed surface shape of the conveyor belt 30. When determining that the thickness is not sufficient, the surface shape measurement device 10 can inform an operator of a fault in the conveyor belt 30 or stop the conveyor belt 30. By thus managing the conveyor belt 30 based on the computed surface shape of the conveyor belt 30, a fault in the conveyor belt 30 can be detected with high accuracy, and the fault can be addressed at an early stage.

As described above, with the above configuration, the surface shape measurement device 10 and the surface shape measurement method according to the present embodiment can handle a belt wider than the width of a single emitted line laser and accurately measure the surface shape of the conveyor belt 30 without interference between line lasers. Furthermore, based on highly accurate surface shape data for the conveyor belt 30, the thickness of the belt can be accurately measured and appropriately managed so as to prevent fractures or the like of the belt. Here, although the thickness of the belt may be calculated, for example, by the arithmetic unit 12 based on the difference between the distance to the surface 31 obtained as the surface shape of the conveyor belt 30 and the distance to the pulley 20 that can be measured simultaneously, it is not limited to any particular calculation method. The distance to the pulley 20 may be obtained by measuring a portion in which the laser sensors 11 are exposed (in which the conveyor belt 30 is not wrapped around).

Although an embodiment of the present disclosure has been described based on the drawings and examples, it is to be noted that various modifications and changes may be easily made by those skilled in the art based on the present disclosure. Accordingly, such modifications and changes are included within the scope of the present disclosure. For example, functions or the like included in each component, each step (process), or the like can be rearranged without logical inconsistency, and a plurality of components, steps, or the like can be combined into one or divided. An embodiment according to the present disclosure can be implemented as a program that is executed by a processor included in a device, or as a storage medium in which the program is recorded. It is to be understood that these are included within the scope of present disclosure.

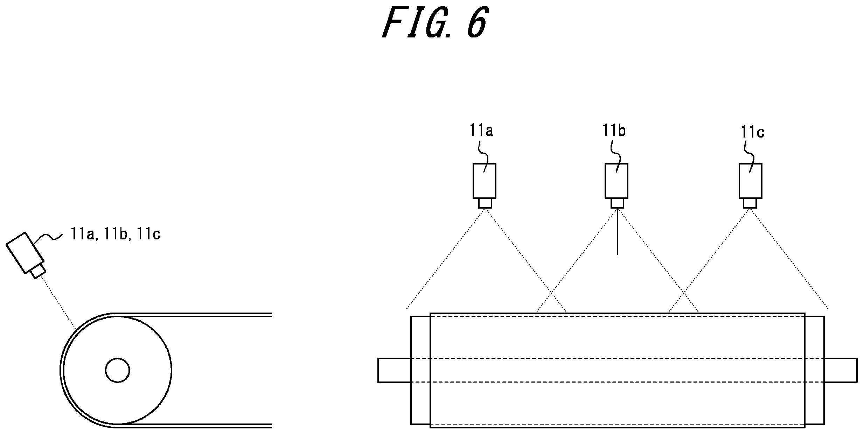

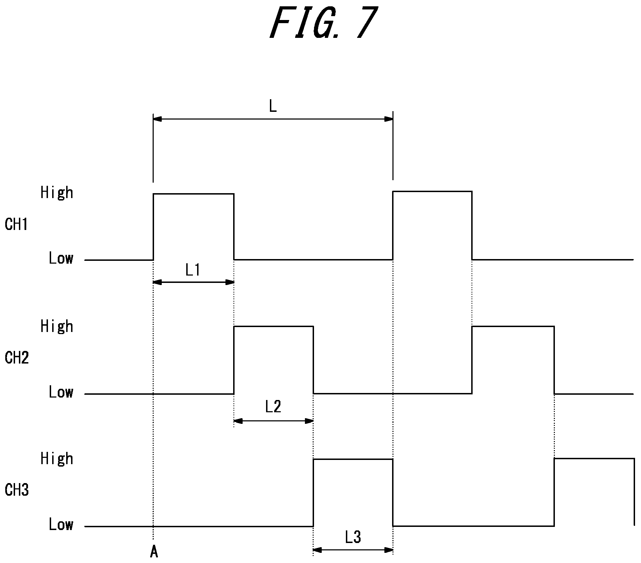

In the above embodiment, it is explained that there are two laser sensors 11, but there can be three or more. By increasing the number of laser sensors 11, an even wider belt can be handled. A surface shape measurement device 10 according to a modification will be described below. FIG. 6 is a view illustrating an example configuration of the surface shape measurement device 10 according to the modification. FIG. 7 is a view illustrating waveforms of signals that control the timing of emitting line lasers in the surface shape measurement device 10 according to the modification.

In the example of FIG. 6, the pulley 20 is even wider than in FIG. 3, and three laser sensors 11 are arranged side by side in the width direction of the pulley 20. The signal generation unit 13 generates signals that determine the emission timings and the emission times of laser beams of the laser sensors 11a, 11b, and 11c, as illustrated in FIG. 7. That is, FIG. 7 illustrates pulse waveforms for three channels generated by the signal generation unit 13. Channel 1 (CH1) corresponds to the laser sensor 11a, channel 2 (CH2) corresponds to the laser sensor 11b, and channel 3 (CH3) corresponds to the laser sensor 11c. As in the above embodiment, surface shape measurement data for the conveyor belt 30 is obtained, by controlling so that there is no interference between laser beams by differentiating the emission timings of laser beams of the laser sensors 11a, 11b, and 11c by the signal generation unit 13. Here, in the example of FIG. 6, the extent of the laser beam emitted by the laser sensor 11a overlaps with the extent of the laser beam emitted by the laser sensor 11b, and the extent of the laser beam emitted by the laser sensor 11b overlaps with the extent of the laser beam emitted by the laser sensor 11c. On the other hand, the extent of the laser beam emitted by the laser sensor 11a and the extent of the laser beam emitted by the laser sensor 11c do not overlap each other. Accordingly, the emission timings of the laser beams of the laser sensors 11a and 11c may be the same.

### REFERENCE SIGN LIST

- 1: Belt conveyor
- 10: Surface shape measurement device
- 11, 11a, 11b, 11c: Laser sensor
- 12: Arithmetic unit
- 13: Signal generation unit
- 20: Pulley
- 21: Center of pulley
- 30: Conveyor belt
- 31: Surface of conveyor belt

## Claims

1. A surface shape measurement device that measures a surface shape of a belt driven in a direction of travel by a drive means, the surface shape measurement device comprising:
a plurality of laser sensors configured to measure the surface shape of the belt by emitting a line laser extending in a width direction of the belt onto the belt, wherein extents of line lasers emitted by the plurality of laser sensors are in vicinity of each other; and
an arithmetic unit configured to control emission timings of the laser sensors so that the emission timings of the plurality of laser sensors do not overlap each other, to acquire measurement data for the laser sensors, and to compute the surface shape of the belt based on the acquired measurement data.

2. The surface shape measurement device according to claim 1, wherein
the laser sensors are configured to measure the surface shape of the belt while the belt is in operation, and
the arithmetic unit is configured to acquire measurement data for an entire length in the direction of travel of the belt and to compute the surface shape of the belt based on the acquired measurement data.

3. The surface shape measurement device according to claim 1 or 2, wherein
the plurality of laser sensors are arranged side by side in the width direction of the belt, and the extents of the emitted line lasers overlap in the width direction of the belt, and
the arithmetic unit is configured to compute the surface shape over an entire width of the belt, by synthesizing the measurement data for the plurality of laser sensors.

4. The surface shape measurement device according to any one of claims 1 to 3, wherein
the belt is wrapped around a pulley serving as a drive means, and
the laser sensors are configured to measure the surface shape of the belt in a portion in which the belt contacts the pulley.

5. The surface shape measurement device according to any one of claims 1 to 4, wherein the laser sensors have a sampling frequency of 1 kHz or higher.

6. A surface shape measurement method that measures a surface shape of a belt driven in a direction of travel by a drive means, the surface shape measurement method comprising:
a measurement step of measuring the surface shape of the belt by emitting a line laser extending in a width direction of the belt onto the belt using a plurality of laser sensors, wherein extents of line lasers emitted by the plurality of laser sensors are in vicinity of each other, while controlling emission timings of the laser sensors so that the emission timings of the plurality of laser sensors do not overlap each other; and
an arithmetic step of acquiring measurement data for the laser sensors and computing the surface shape of the belt based on the acquired measurement data.
